(19) Europäisches Patentamt
European Patent Office
Office européen des brevets

(11) EP 1 309 651 B1

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(21) Anmeldenummer: **01960494.1**

(22) Anmeldetag: **12.07.2001**

(51) Int Cl.[7]: **C08J 5/18**, C08L 67/02, B32B 27/36

(86) Internationale Anmeldenummer:
**PCT/EP2001/008041**

(87) Internationale Veröffentlichungsnummer:
**WO 2002/008317 (31.01.2002 Gazette 2002/05)**

(54) **OPAKE POLYESTERFOLIE ENTHALTEND EIN CYCLOOLEFINCOPOLYMER (COC) MIT GUTER OBERFLÄCHENHAFTUNG, VERFAHREN ZU IHRER HERSTELLUNG UND IHRE VERWENDUNG**

OPAQUE POLYESTER FILM CONTAINING A CYCLIC OLEFIN COPOLYMER (COC) WITH GOOD SURFACE ATTACHMENT, METHOD FOR PRODUCING THE SAME AND USE THEREOF

FEUILLE POLYESTER OPAQUE COMPRENANT UN COPOLYMERE CYCLOOLEFINIQUE (COC), AYANT UNE BONNE ADHERENCE DE SURFACE, SON PROCEDE DE REALISATION ET SON UTILISATION

(84) Benannte Vertragsstaaten:
**AT DE FR GB IT LU**

(30) Priorität: **20.07.2000 DE 10035328**

(43) Veröffentlichungstag der Anmeldung:
**14.05.2003 Patentblatt 2003/20**

(73) Patentinhaber: **Mitsubishi Polyester Film GmbH
65203 Wiesbaden (DE)**

(72) Erfinder:
- **BENNETT, Cynthia
55232 Alzey (DE)**
- **HILKERT, Gottfried
55291 Saulheim (DE)**
- **BARTSCH, Stefan
65199 Wiesbaden (DE)**
- **PEIFFER, Herbert
55126 Mainz (DE)**

(74) Vertreter: **Schweitzer, Klaus
Patentanwaltskanzlei Zounek
Industriepark Kalle-Albert
Gebäude H391
Rheingaustrasse 190-196
65174 Wiesbaden (DE)**

(56) Entgegenhaltungen:
**EP-A- 0 786 495**
**EP-A- 1 068 949**
**EP-A- 1 132 418**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine opake, biaxial orientierte Polyesterfolie, die mindestens eine Schicht umfasst, welche einen Polyesterrohstoff und ein Cycloolefincopolymer (COC) enthält und mindestens eine Oberfläche hat, die eine gute Haftung zu anderen Polymer- oder Metall-Schichten oder Druckfarben aufweist. Die Erfindung betrifft ferner ein Verfahren zur Herstellung der Polyesterfolie sowie ihre Verwendung.

Opake, biaxial orientierte Polyesterfolien sind bekannt.

In der **DE-A 2 353 347** wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass das bei der Herstellung der Folie anfallende Regenerat (im Wesentlichen ein Gemisch aus Polyesterrohstoff und Ethylen- oder Propylen-Mischpolymer) nicht mehr eingesetzt werden kann, da ansonsten die Folie verfärbt bzw. gelb wird. Das Verfahren ist damit unwirtschaftlich. Außerdem weist die Folie deutlich zu hohe Rauigkeiten auf und hat damit ein sehr mattes Aussehen (sehr niedriger Glanz), was für viele Anwendungszwecke unerwünscht ist.

In der EP-A 0 300 060 wird eine einschichtige Polyesterfolie beschrieben, die außer Polyethylenterephthalat noch 3 bis 40 Gew.-% eines kristallinen Propylenpolymeren und 0,001 bis 3 Gew.-% einer oberflächenaktiven Substanz enthält. Die oberflächenaktive Substanz bewirkt, dass die Anzahl der Vakuolen in der Folie ansteigt und gleichzeitig ihre Größe in gewünschtem Maße abnimmt. Hierdurch wird eine höhere Opazität und eine niedrigere Dichte der Folie erzielt. Nachteilig ist auch hier, dass das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb verfärbt wird. Das Verfahren ist damit unwirtschaftlich. Außerdem weist die Folie eine schlechte Haftung zu Druckfarben, reprografischen und anderen Funktionsschichten, wie z.B. Metallschichten, hohe Rauigkeiten auf und hat damit ein sehr mattes Aussehen (sehr niedriger Glanz), was für viele Anwendungszwecke unerwünscht ist.

In der **EP-A 0 360 201** wird eine zumindest zweischichtige Polyesterfolie beschrieben, die eine Basisschicht mit feinen Vakuolen aufweist, deren Dichte zwischen 0,4 und 1,3 g/cm$^3$ liegt und mindestens eine Deckschicht aufweist, deren Dichte größer als 1,3 g/cm$^3$ ist. Die Vakuolen werden durch Zugabe von 4 bis 30 Gew.-% eines kristallinen Propylenpolymeren und anschließender biaxialer Streckung der Folie erzielt. Durch die zusätzliche Deckschicht wird die Herstellbarkeit der Folie besser (keine Streifenbildung auf der Oberfläche der Folie), die Oberflächenspannung wird erhöht (und der Kontaktwinkel und die Rauigkeit der laminierten Oberfläche kann verringert werden. Nachteilig ist auch hier, dass das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb verfärbt wird. Das Verfahren ist damit unwirtschaftlich. Außerdem weisen die Folien noch immer eine schlechte Haftung zu Druckfarben, Polymer- und Metallschichten zu hohe Rauigkeiten auf und haben damit ein mattes Aussehen (niedriger Glanz), was für viele Anwendungszwecke unerwünscht ist.

In der **EP-A 0 795 399** wird eine zumindest zweischichtige Polyesterfolie beschrieben, die eine Basisschicht mit feinen Vakuolen aufweist, deren Dichte zwischen 0,4 und 1,3 g/cm$^3$ liegt und mindestens eine Deckschicht aufweist, deren Dichte größer als 1,3 g/cm$^3$ beträgt. Die Vakuolen werden durch Zugabe von 5 bis 45 Gew.-% eines thermoplastischen Polymers zum Polyesterrohstoff in der Basisschicht und anschließender biaxialer Streckung der Folie erzeugt. Als thermoplastische Polymere werden u.a. Polypropylen, Polyethylen, Polymethylpenten, Polystyrol oder Polycarbonat genannt, wobei Polypropylen das bevorzugte thermoplastische Polymer ist. Durch die zusätzliche Deckschicht wird die Herstellbarkeit der Folie besser (keine Streifenbildung auf der Oberfläche der Folie), die Oberflächenspannung wird erhöht und die Rauigkeit der laminierten Oberfläche kann den jeweiligen Erfordernissen angepasst werden. Eine weitere Modifizierung der Folie in der Basisschicht und/oder in den Deckschichten mit Weiß-Pigmenten (in der Regel $TiO_2$) und/oder mit optischen Aufhellern ermöglicht die Anpassung der Folieneigenschaften an die jeweiligen Anwendungserfordemisse. Nachteilig ist jedoch auch hier, dass das bei der Herstellung der Folie anfallende Regenerat (im Wesentlichen ein Gemisch aus Polyesterrohstoff und dem additiven Rohstoff) nicht mehr eingesetzt werden kann, da ansonsten die Folie undefiniert in der Farbe verändert wird, was für viele Anwendungen unerwünscht ist. Das Verfahren ist damit unwirtschaftlich. Außerdem weisen die Folien eine schlechte Haftung zu Druckfarben, reprografischen und anderen Funktionsschichten, wie z.B. Metallschichten, zu hohe Rauigkeiten auf und haben damit ein mattes Aussehen (niedriger Glanz), was für viele Anwendungszwecke unerwünscht ist.

In der **DE-A 195 40 277** wird eine ein- oder mehrschichtige Polyesterfolie beschrieben, die eine Basisschicht mit feinen Vakuolen aufweist, deren Dichte zwischen 0,6 und 1,3 g/cm$^3$ liegt und eine Doppelbrechung in der Ebene aufweist, die von -0,02 bis 0,04 reicht. Die Vakuolen werden durch Zugabe von 3 bis 40 Gew.-% eines thermoplastischen Harzes zum Polyesterrohstoff in der Basisschicht und anschließender biaxialer Streckung der Folie erzeugt. Als thermoplastische Harze werden u.a. Polypropylen, Polyethylen, Polymethylpenten, cyclische Olefin-Polymere, Polyacrylharze, Polystyrol oder Polycarbonat genannt, wobei Polypropylen und Polystyrol bevorzugte Rohstoffe sind. Durch

Einhalt der angegebenen Grenzen für die Doppelbrechung der Folie zeichnet sich die beanspruchte Folie insbesondere durch eine gute Reißfestigkeit und gute Isotropieeigenschaften aus. Nachteilig bleibt , dass das bei der Herstellung der Folie anfallende Regenerat nicht mehr eingesetzt werden kann, da ansonsten die Folie undefiniert in der Farbe verändert wird, was für viele Anwendungen unerwünscht ist. Das Verfahren ist damit unwirtschaftlich. Außerdem weisen die Folien eine schlechte Haftung zu Druckfarben, reprografischen und anderen Funktionsschichten, wie z.B. Metallschichten, zu hohe Rauigkeiten auf und haben damit ein mattes Aussehen (niedriger Glanz), was für viele Anwendungszwecke unerwünscht ist.

In der **EP-A 0144 878** werden Folien mit einer Copolyesterbeschichtung beschrieben, die eine gute Haftung zu Metallen aufweisen. Die dort beschriebenen Folien weisen zwar eine gute Haftung zu Metallen auf, sie sind jedoch auch nicht opak.

In der **EP-A 0 144 948** werden Folien mit einer vernetzten acrylischen Haftvermittlerbeschichtung beschrieben, die eine gute Haftung zu lichtempfindlichen reprografischen Beschichtungen aufweisen. Die dort beschriebenen Folien weisen zwar eine gute reprografische Haftung und Regenerierbarkeit auf, sie sind ebenfalls nicht opak.

In der **EP-A 0 884 348** werden Folien mit einer Haftvermittlerschicht beschrieben, die eine gute Haftung zu wasserlöslichen oder hydrophilen Schichten aufweisen. Die dort beschriebene Folien weisen zwar eine gute Haftung zu wässrig aufgebrachten Schichten auf, sie sind jedoch nicht opak.

Die nicht vorveröffentlichten **EP-A 1 068 949** und **EP-A 1 132 418** beschreiben opake, biaxial orientierte Polyesterfolien, umfassend mindestens eine Schicht, wobei zumindest diese Schicht ein Cycloolefincopolymeres (COC) in einer Konzentration von 2 bis 60 Gew.-%, bezogen auf diese Schicht, enthält und wobei die Glasübergangstemperatur des Cycloolefincopolymeren (COC) im Bereich von 70 bis 270 °C liegt. Einzelheiten über eine Haftvermittlerbeschichtung sind dort nicht beschrieben.

Die Aufgabe der vorliegenden Erfindung bestand daher darin, eine opake Polyesterfolie bereitzustellen, die sich durch einen hohen Glanz, insbesondere durch eine gute Haftung zu anderen Schichten und eine verbesserte Herstellbarkeit, d.h. geringe Herstellkosten, auszeichnet ohne dabei die oben genannten nachteiligen Eigenschaften aufzuweisen. Insbesondere soll gewährleistet sein, dass das bei dem Herstellprozess immanent anfallende Regenerat in einer Konzentration von bevorzugt 10 bis 70 Gew.-%, bezogen auf das Gesamtgewicht der Folie, wieder verwendet werden kann, ohne dass dabei die physikalischen Eigenschaften der Folie nennenswert negativ beeinflusst werden. Insbesondere soll durch die Regeneratzugabe keine nennenswerte Verfärbung bzw. Gelbfärbung der Folie auftreten.

Die Aufgabe wird gelöst durch eine opake, biaxial orientierte Polyesterfolie umfassend mindestens eine Schicht, wobei zumindest diese Schicht ein Cycloolefincopolymeres (COC) in einer Konzentration von 2 bis 60 Gew.-%, bezogen auf diese Schicht, enthält, wobei die Glasübergangstemperatur des Cycloolefincopolymeren (COC) im Bereich von 70 bis 270 °C liegt, und wobei mindestens eine Oberfläche der Folie durch Corona- oder Flammbehandlung und/odereine aufgebrachte Haftvermittlerschicht haftvermittelt ist, wobei die Haftvermittlerschicht eine oder mehrere Substanzen, ausgewählt aus der Gruppe Acrylate, Ethylenvinylalkohole, PVDC, Wasserglas, hydrophile Polyester, Polyvinylacetate, Polyurethane, Alkali- oder Erdalkalisalze von $C_{10}$-$C_{18}$-Fettsäuren und Butadiencopolymere mit Acrylnitril oder Methylmethacrylat, Methacrylsäure, Acrylsäure oder deren Ester, enthält.

Unter einer opaken, biaxial orientierten Polyesterfolie im Sinne der vorliegenden Erfindung wird eine Folie bezeichnet, die eine so starke Lichtstreuung aufweist, dass darunter liegende Muster nicht erkennbar sind. Die Opazität der erfindungsgemäßen Folie beträgt mehr als 55 %, bevorzugt mehr als 60 % und besonders bevorzugt mehr als 65 %.

In der Regel sind die opaken, biaxial orientierten Polyesterfolien im Sinne der vorliegenden Erfindung weiß. Unter einer weißen, biaxial orientierten Polyesterfolie im Sinne der vorliegenden Erfindung wird eine solche Folie bezeichnet, die einen Weißgrad von mehr als 70 %, bevorzugt von mehr als 75 % und besonders bevorzugt von mehr als 80 %, aufweist.

Zur Erzielung der gewünschten Opazität der erfindungsgemäßen Folie sollte vorzugsweise der Anteil an dem Cycloolefincopolymeren (COC) in der Basisschicht größer als 2 % sein, andernfalls ist die Opazität kleiner als 55 %. Ist der Cycloolefincopolymer (COC)-Gehalt andererseits größer als 60 %, so lässt sich die Folie nicht mehr wirtschaftlich herstellen, da sie sich nicht mehr verfahrenssicher verstrecken lässt.

Weiterhin ist ist bevorzugt, dass die Glasübergangstemperatur des eingesetzten Cycloolefincopolymeren (COC) größer als 70 °C ist. Andernfalls (bei einer Glasübergangstemperatur von kleiner als 70 °C) ist das Rohstoffgemisch unter Umständen schlechter verarbeitbar (schlechter extrudierbar), der gewünschte Weißgrad wird unter Umständen nicht mehr erreicht und das eingesetzte Regenerat führt zu einer Folie, die eine erhöhte Gelbfärbung aufweisen kann. Ist andererseits die Glasübergangstemperatur des ausgewählten Cycloolefincopolymeren (COC) größer als 270 °C, so wird sich die Rohstoffmischung unter Umständen im Extruder nicht mehr ausreichend homogen dispergieren lassen. Dies hätte dann eine Folie mit inhomogenen Eigenschaften zur Folge.

In der bevorzugten Ausführungsform der erfindungsgemäßen Folie liegt die Glasübergangstemperatur der verwendeten COCs in einem Bereich von 90 bis 250 °C und in der besonders bevorzugten Ausführungsform in einem Bereich von 110 bis 220 °C.

Überraschenderweise wurde gefunden, dass durch den Zusatz eines Cycloolefincopolymeren (COC) in der

vorstehend beschriebenen Weise eine opake, glänzende Folie hergestellt werden kann.

Entsprechend der Menge und der Art des zugegebenen Cycloolefincopolymeren (COC) kann der Weißgrad und die Opazität der Folie exakt eingestellt und den jeweiligen Anforderungen angepasst werden. Durch diese Maßnahme ist es möglich, auf andere gängige weiß- und opakmachende Additive weitgehend zu verzichten. Weiterhin war es sehr überraschend, dass die Oberflächenrauigkeit der Folie wesentlich geringer und damit der Glanz der Folie wesentlich höher ist, als bei vergleichbaren Folien nach dem Stand der Technik. Vollkommen überraschend war darüber hinaus der zusätzliche Effekt, dass das Regenerat nicht, wie die polymeren Additive nach dem Stand der Technik, zur Gelbverfärbung neigt.

Alle diese beschriebenen Merkmale waren nicht vorhersehbar. Dies umso mehr, da z.B. COCs zwar zum bevorzugten Polyester Polyethylenterephthalat weitgehend inkompatibel sind, bekanntlich aber mit ähnlichen Streckverhältnissen und Strecktemperaturen orientiert werden, wie Polyethylenterephthalat. Unter diesen Voraussetzungen hätte der Fachmann erwartet, dass bei den erfindungsgemäßen Herstellbedingungen keine weiße, opake Folie mit hohem Glanz produziert werden kann.

Insbesondere in den bevorzugten und den besonders bevorzugten Ausführungsformen zeichnet sich die erfindungsgemäße Folie durch einen hohen/bzw. durch einen besonders hohen Weißgrad und eine hohe/bzw. durch eine besonders hohe Opazität aus, wobei die Farbänderung der Folie durch die Regeneratzugabe äußerst gering bleibt.

Die erfindungsgemäße Folie ist einschichtig oder mehrschichtig. Einschichtige Ausführungsformen sind wie die nachstehend beschriebene COC-haltige Schicht aufgebaut. Mehrschichtige Ausführungsformen sind mindestens zweischichtig und umfassen immer die COC-haltige Schicht und zumindest eine weitere Schicht, wobei die COC-haltige Schicht die Basisschicht ist, aber zusätzlich auch die Zwischen- oder die Deckschicht der mehrschichtigen Folie bilden kann. In einer bevorzugten Ausführungsform bildet die COC-haltige Schicht die Basisschicht der Folie mit mindestens einer, vorzugsweise mit beidseitigen Deckschichten, wobei gegebenenfalls einseitig eine oder beidseitig Zwischenschichten vorhanden sein können. Der Schichtaufbau der Folie ist dann z.B. A-B-C, wobei B die Basisschicht und A und C die Deckschichten sind, die gleich oder verschieden sein können. In einer weiteren bevorzugten Ausführungsform bildet die COC-haltige Schicht auch eine Zwischenschicht der Mehrschichtfolie. Weitere Ausführungsformen mit COC-haltigen Zwischenschichten sind fünfschichtig aufgebaut und haben neben der COC-haltigen Basischicht beidseitig COC-haltige Zwischenschichten. In einer weiteren Ausführungsform kann die COC-haltige Schicht zusätzlich zur Basisschicht, ein- oder beidseitig Deckschicht/en auf der Basis- oder Zwischenschicht bilden. Die Basisschicht ist im Sinne der vorliegenden Erfindung diejenige Schicht, welche bevorzugt 50 % bis 100 %, insbesondere 70 bis 90 %, der Gesamtfoliendicke ausmacht. Die Deckschichten sind die Schichten, welche die äußeren Schichten der Folie bilden.

Die jeweilige Ausführungsform der Erfindung ist eine nicht transparente, opake Folie. Unter nicht transparenten Folien werden im Sinne der vorliegenden Erfindung solche Folien verstanden, deren Lichtdurchlässigkeit nach ASTM-D 1003-77 unter 95 %, vorzugsweise unter 75 %, liegt.

Die COC-haltige Schicht (die Basisschicht) der erfindungsgemäßen Folie enthält einen thermoplastischen Polyester, vorzugsweise ein Polyesterhomopolymeres, ein COC sowie gegebenenfalls weitere zugesetzte Additive in jeweils wirksamen Mengen. Im allgemeinen enthält diese Schicht bevorzugt mindestens 20 Gew.-% bis 98 Gew. -%, vorzugsweise 40 bis 98 Gew. -%, insbesondere 70 bis 98 Gew. -%, an thermoplastischen Polyester, bezogen auf das Gewicht der Schicht.

Geeignete thermoplastische Polyester für die Basisschicht sind bevorzugt Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch z.B. in der Schicht A (A=Deckschicht 1) oder der Schicht C (C=Deckschicht 2) einer mehrschichtigen Folie ABC (B=Basisschicht) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicar bonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$)-Alkandisäuren besonders geeignet, wobei der Alkanteil geradkettig oder verzweigt sein kann.

Die Herstellung der erfindungsgemäßen zu verwendenden Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die COC-haltige Schicht bzw. die Folie bei einschichtigen Ausführungsformen ein Cycloolefincopolymeres (COC) in einer Menge von bevorzugt minimal 2,0 Gew.-%, insbesondere 4 bis 50 Gew.-% und besonders bevorzugt 6 bis 40 Gew.-%, bezogen auf das Gewicht der mit COC ausgerüsteten Schicht bzw. bezogen auf das Gewicht der Folie bei einschichtigen Ausführungsformen. Es ist wesentlich für die vorliegende Erfindung, wenn das Cycloolefincopolymere (COC) mit dem thermoplastischen Polyester, z.B. Polyethylenterephthalat nicht verträglich ist und mit diesem keine homogene Mischung bildet.

Cycloolefinpolymere sind allgemein Homopolymerisate oder Copolymerisate, welche polymerisierte Cycloolefineinheiten und gegebenenfalls acyclische Olefine als Comonomer enthalten. Für die vorliegende Erfindung sind besonders Cycloolefinpolymere geeignet, die 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefineinheiten enthalten. Bevorzugt sind insbesondere Polymere, die aus den Monomeren der cyclischen Olefinen der Formeln I, II, III, IV, V oder VI aufgebaut sind

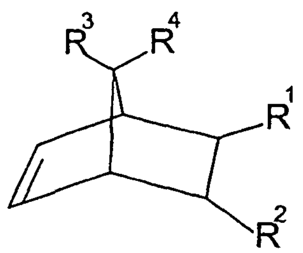
(I)

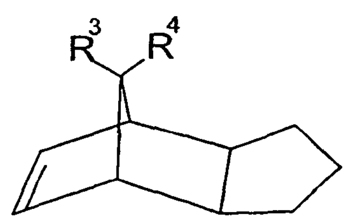
(II

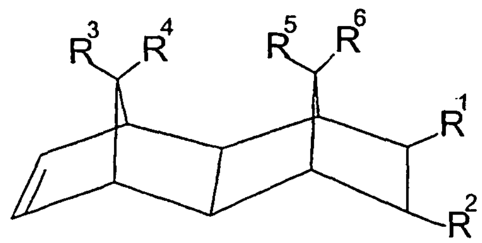
(III

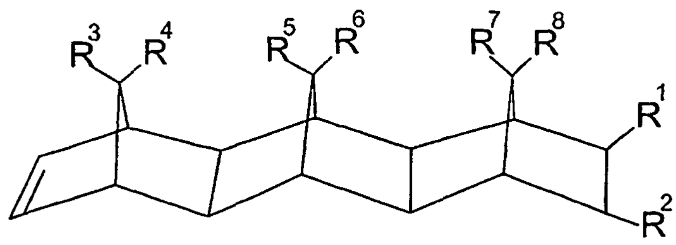
(IV

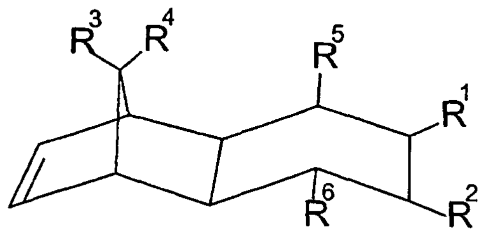

(V)

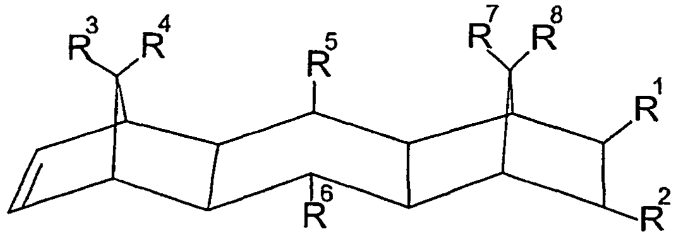

(VI

In diesen Formeln sind $R^1$, $R^2$, $R^3$, $R^4$, $R^5$, $R^6$, $R^7$ und $R^8$ unabhängig voneinander gleich oder verschieden und bedeuten ein Wasserstoffatom oder einen $C_1$-$C_{30}$-Kohlenwasserstoffrest; oder zwei oder mehrere der Reste $R^1$ bis $R^8$ sind cyclisch verbunden, wobei gleiche Reste in den verschiedenen Formeln gleiche oder unterschiedliche Bedeutung haben. $C_1$-$C_{30}$-Kohlenwasserstoffreste sind bevorzugt lineare oder verzweigte $C_1$-$C_8$-Alkylreste, $C_6$-$C_{18}$-Arylreste, $C_7$-$C_{20}$-Alkylenarylreste oder cyclische $C_3$-$C_{20}$-Alkylreste oder acyclische $C_2$-$C_{20}$-Alkenylreste.

Gegebenenfalls können die erfindungsgemäßen Cycloolefinpolymere 0 bis 45 Gew.-%, bezogen auf die Gesamtmasse des Cycloolefinpolymeres, polymerisierte Einheiten mindestens eines monocyclischen Olefins der Formel VII enthalten:

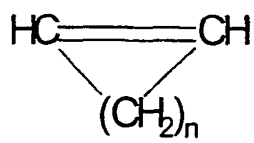

(VII)

Hierin ist n eine Zahl von bevorzugt 2 bis 10.

Gegebenenfalls können die Cycloolefinpolymere 0 bis 99 Gew.-%, bezogen auf die Gesamtmasse des Cycloolefinpolymeren, polymerisierte Einheiten eines acyclischen Olefins der Formel VIII enthalten:

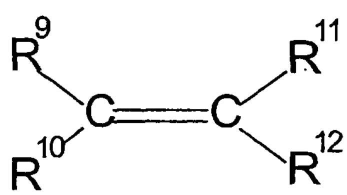

(VIII)

Hierin sind $R^9$, $R^{10}$, $R^{11}$, und $R^{12}$ unabhängig voneinander gleich oder verschieden und bedeuten ein Wasserstoffatom oder $C_1$-$C_{10}$-Kohlenwasserstoffrest, bevorzugt einen $C_1$-$C_8$-Alkylrest oder $C_6$-$C_{14}$-Arylrest.

Ebenfalls prinzipiell geeignet sind Cycloolefinpolymere, welche durch ringöffnende Polymerisation mindestens eines der Monomere der Formeln I bis VI und anschließende Hydrierung erhalten werden.

Cycloolefin-Homopolymere sind aus einem Monomeren der Formeln I-VI aufgebaut. Diese Cycloolefin-Polymere sind für die Zwecke der vorliegenden Erfindung weniger geeignet. Für die Zwecke der vorliegenden Erfindung sind insbesondere Cycloolefincopolymerisate (COC) geeignet, welche mindestens ein Cycloolefin der Formeln I bis VI und mindestens ein Comonomer enthalten. Bevorzugte Comonomere sind die acyclischen Olefine der Formel VIII.

Im vorstehenden wie im nachfolgenden werden diese erfindungsgemäß verwendbaren Cycloolefincopolymerisate COC genannt. Dabei sind als acyclische Olefine VIII solche bevorzugt, die 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen Cycloolefincopolymers.

Unter den Cycloolefincopolymeren sind insbesondere diejenigen bevorzugt, die polymerisierte Einheiten polycyclischer Olefine mit Norbornengrundstruktur, besonders bevorzugt Norbornen, 5-Methyl-Norbornen oder Tetracyclododecen, enthalten. Geeignete Monomere sind weiterhin Dimethyloctahydronaphthalin und Cyclopenten. Besonders bevorzugt sind auch Cycloolefincopolymere (COC), die polymerisierte Einheiten acyclischer Olefine, insbesondere Ethylen, enthalten. Wiederum besonders bevorzugt sind Norbomen/Ethylen- und Tetracyclododecen/Ethylen-Copolymere, welche 5 bis 80 Gew.-%, vorzugsweise 10 bis 60 Gew.-% an acyclischem Olefin enthalten (bezogen auf das Gewicht des Copolymeren).

Die beschriebenen Cycloolefinpolymere weisen im allgemeinen Glasübergangstemperaturen zwischen -20 °C und 400 °C auf. Für die Erfindung sind bevorzugt Cycloolefincopolymerisate (COC) verwendbar, die eine Glasübergangstemperatur von größer als 70 °C, vorzugsweise größer als 90 °C und insbesondere größer als 110 °C aufweisen. Die Viskositätszahl (Dekalin, 135 °C, DIN 53 728) liegt zweckmäßigerweise zwischen 0,1 und 200 ml/g, bevorzugt zwischen 50 und 150 ml/g.

Die Herstellung der Cycloolefincopolymere (COC) geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf die in obengenannten Schriften beschriebenen Herstellungsverfahren von Cycloolefinpolymeren wird hiermit ausdrücklich Bezug genommen.

Die Cycloolefincopolymere werden entweder als reines Granulat oder als granuliertes Konzentrat (Masterbatch) in die Folie eingearbeitet, indem das Polyestergranulat oder -pulver mit dem Cycloolefincopolymer (COC) bzw. dem Cycloolefincopolymer (COC)-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren zweckmäßig, dass die Extrusionstemperatur oberhalb der Glasübergangstemperatur $T_g$ des Cycloolefincopolymeren (COC) liegt, im allgemeinen mindestens 5 °C, vorzugsweise 10 bis 180 °C, insbesondere 15 bis 150 °C, über der Glasübergangstemperatur des Cycloolefincopolymeren (COC).

Für die Zwischenschichten und für die Deckschichten können prinzipiell die gleichen Polymere verwendet werden, wie für die Basisschicht. Bevorzugt können die Deckschichten aus einem Gemisch von Polymeren, einem Copolymeren oder einem Homopolymeren bestehen, welche Ethylen-2,6-naphthalat-Einheiten und Ethylen-terephthalat-Einheiten enthalten. Bis zu 30 mol-% der Polymere können aus weiteren Comonomeren (z.B. Ethylen-isophthalat-Einheiten) bestehen.

Die Basisschicht und die anderen Schichten können zusätzlich übliche Additive, wie Stabilisatoren, Antiblockmittel und andere Füller, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, pyrogene Kieselsäure, sphärische Siliziumdioxidpartikel, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Als Additive können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikel können den Polymeren der einzelnen Schichten der Folie in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 25 Gew.-% erwiesen (bezogen auf das Gewicht der jeweiligen Schicht). Eine detaillierte Beschreibung der geeigneten Antiblockmittel findet sich beispielsweise in der EP-A-0 602 964.

Wird eine Farbe außer Weiß für die erfindungsgemäße opake Folie gewünscht, so kann der gewünschte Farbton durch die Einmischung von Farbmitteln oder -gemischen in den Polyester erzielt werden. Es können sowohl lösliche Farbstoffe als auch unlösliche Farbpigmente verwendet werden.

Erfindungsgemäß ist mindestens eine Folienoberfläche so behandelt, dass der Kontaktwinkel zu Wasser $\leq$ 64°, bevorzugt $\leq$ 62°, besonders bevorzugt $\leq$ 60° beträgt. Dies wird bevorzugt durch eine Corona- bzw. Flammbehandlung erreicht, die sich üblicherweise an die Thermofixierung der Folie anschließt. Ebenso kann die Behandlung an anderen Stellen im Folienherstellprozess, beispielsweise vor oder nach der Längsstreckung erfolgen. Alternativ oder zusätzlich zu der oben beschriebenen Oberflächenbehandlung kann die Folie auf mindestens einer ihrer Oberflächen mit einer funktionalen Beschichtung beschichtet werden, so dass die Beschichtung auf der fertigen Folie eine Dicke von 5 bis 2000 nm, bevorzugt 20 bis 500 nm, insbesondere 30 bis 200 nm aufweist. Die Beschichtung wird bevorzugt In-line aufgebracht, d.h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtungen äußerst homogen in Schichtdicken bis 100 nm auftragen lassen. Ebenfalls bevorzugt ist die Aufbringung durch das Meyer-Rod-Verfahren, mit dem sich größere Beschichtungsstärken erzielen lassen. Die Beschichtungen werden bevorzugt als Lösungen, Suspensionen oder Dispersionen aufgetragen, besonders bevorzugt als wässrige Lösung, Suspension oder Dispersion. Die genannten Beschichtungen verleihen der Folienoberfläche eine zusätzliche Funktion; beispielsweise wird die Folie dadurch siegelfähig, bedruckbar, metallisierbar, sterilisierbar, antistatisch oder verbessern z.B. die Aromabarriere oder ermöglichen die Haftung zu Materialien, die ansonsten nicht auf der Folienoberfläche haften würden (z.B. photographische Emulsionen). Beispiele für Stoffe/Zusammensetzungen, die zusätzliche Funktionalität verleihen sind: Acrylate, wie sie bspw. beschrieben sind in der WO 94/13476, Ethylenvinylalkohole, PVDC, Wasserglas ($Na_2SiO_4$), hydrophile Polyester (5-Na-sulfoisophthalsäurehaltiger PET/IPA Polyester, wie sie bspw. beschrieben sind in der EP-A-0 144 878, US-A-4,252,885 oder EP-A-0 296 620), Polyvinylacetate, wie sie bspw. beschrieben sind in der WO 94/13481, Polyvinylacetate, Polyurethane, Alkali- oder Erdalkalisalze von $C_{10}$-$C_{18}$-Fettsäuren, Butadiencopolymere mit Acrylnitril oder Methylmethacrylat, Methacrylsäure, Acrylsäure oder deren Ester.

Die genannten Stoffe/Zusammensetzungen werden als verdünnte Lösung, Emulsion oder Dispersion vorzugsweise als wässrige Lösung, Emulsion oder Dispersion auf eine oder beide Folienoberflächen aufgebracht und anschließend das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann Schichtdicken von 5 bis 2000 nm, bevorzugt 20 bis 500 nm, insbesondere 30 bis 200 nm.

In einer bevorzugten Ausführungsform der Erfindung wird eine Copolyesterbeschichtung zur Erzielung der besseren Haftung verwendet. Die bevorzugten Beschichtungscopolyester werden durch Polykondensation von

(α) Isophthalsäure,
(β) einer aliphatischen Dicarbonsäure mit der Formel $HOOC(CH_2)_nCOOH$, wobei n m Bereich von 1 bis 11 liegt,
(γ) einem Sulfomonomeren enthaltend eine Alkalimetallsulfonatgruppe an dem aromatischen Teil einer aromatischen Dicarbonsäure und
(δ) wenigstens einem aliphatischen oder cycloaliphatischen Alkylenglykol mit etwa 2 bis 11, bevorzugt 2 bis 8, besonders bevorzugt 2 bis 6 Kohlenstoffatomen hergestellt.

Die insgesamt anwesenden Dicarbonsäure-Äquivalente sollen auf molarer Basis im wesentlichen den insgesamt anwesenden Diol-Äquivalenten entsprechen.

Es hat sich gezeigt, dass die verhältnismäßigen Anteile der Komponenten α, β, γ und ö die zur Herstellung der bevorzugten Copolyesterbeschichtungen eingesetzt werden, entscheidend für das Erzielen einer beschichteten Folie mit zufriedenstellender Haftung sind. So sollte bevorzugt z.B. Isophthalsäure (Komponente α) zu mindestens etwa 65 mol-% als Säurekomponente anwesend sein. Bevorzugt ist die Komponente α reine Isophthalsäure, die in einer Menge von etwa 70 bis 95 mol-% anwesend ist. Für die Komponente β gilt, dass jede Säure mit der genannten Formel zufriedenstellende Ergebnisse bringt, wobei Adipinsäure, Azelainsäure, Sebacinsäure, Malonsäure, Bernsteinsäure, Glutarsäure und Mischungen dieser Säuren bevorzugt werden. Die angestrebte Menge innerhalb des angegebenen Bereiches beträgt bevorzugt 1 bis 20 mol-%, bezogen auf die Säurekomponenten des Copolyesters, wenn die Komponente β in der Zusammensetzung enthalten ist. Das die Komponente γ der bevorzugten Copolyesterbeschichtung bildende Monomere sollte bevorzugt in einer Menge von wenigstens 5 mol-% in diesem System enthalten sein, damit die Grundierung mit Wasser dispergierbar wird. Besonders bevorzugt liegt die Menge an Monomerem der Komponente γ bei etwa 6,5 bis 12 mol-%. Die Glykolkomponente (δ) ist in ungefähr stöchiometrischer Menge anwesend.

In einer weiteren bevorzugten Ausführungsform der Erfindung wird eine Acrylatbeschichtung zur Erzielung der besseren Haftung verwendet. Die bevorzugt verwendeten Acrylcopolymeren bestehen im wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist.

Die acrylische Komponente der Haftvermittlercopolymere ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C-Atome enthält, wie z.B. die Methyl-, Ethyl-, n-Propyl-, Isopropyl-, n-Butyl-, Isobutyl-, tertiäre

Butyl-, Hexyl-, 2-Ethylhexyl-, Heptyl- und n-Octylgruppe. Acrylcopolymere, die von einem niederen Alkylacrylat ($C_1$ bis $C_4$) abgeleitet sind, insbesondere Ethylacrylat, ergeben zusammen mit einem niederen Alkylmethacrylat eine besonders gute Haftung zwischen der Polyesterfolie und darauf aufgebrachten reprographischen Beschichtungen und Mattbeschichtungen. Ganz besonders bevorzugt werden Haftvermittlercopolymere aus einem Alkylacrylat, z.B. Ethylacrylat oder Butylacrylat, zusammen mit einem Alkylmethacrylat, z.B. Methylmethacrylat, insbesondere zu gleichen molaren Anteilen und in einer Gesamtmenge von 70 bis 95 Gew.-%, eingesetzt. Das Acrylatcomonomere solcher Acryl/Methacryl-Kombinationen ist vorzugsweise in einem Anteil von 15 bis 65 mol-% anwesend und das Methacrylat-Comonomere vorzugsweise in einem Anteil, der im allgemeinen um 5 bis 20 mol-% größer ist als der Anteil des Acrylatcomonomeren. Das Methacrylat ist vorzugsweise in einem Anteil von 35 bis 85 mol-% in der Kombination enthalten.

Zur Erhöhung der Lösungsmittelbeständigkeit können gebenenfalls zur Ausbildung von Vernetzungen geeignete Comonomere eingesetzt werden, z.B. N-Methylolacrylamid, N-Methylolmethacrylamid und die entsprechenden Ether; Epoxidmaterialien wie z.B. Glycidylacrylat, Glycidylmethacrylat und Allylglycidylether; Carboxylgruppen enthaltende Monomerewie z.B. Crotonsäure, Itaconsäure oder Acrylsäure; Anhydride wie z.B. Maleinsäureanhydrid oder Itaconsäureanhydrid; Hydroxylgruppen enthaltende Monomere wie Allylalkohol und Hydroxyethyl- oder Hydroxypropylacrylat oder -methacrylat; Amide wie Acrylamid, Methacrylamid oder Maleinsäureamid und Isocyanate wie Vinylisocyanat oder Allylisocyanat. Von den oben genannten vernetzenden Comonomeren werden N-Methylolacrylamid und N-Methylolmethacrylamid bevorzugt, und zwar in erster Linie deswegen, weil Copolymerenketten, die eines dieser Monomerer enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels, z. B. eines Melamin- oder Harnstoff-Formaldehyd-Kondensationsproduktes, erzielt werden. Wird keine Lösungsmittelbeständigkeit benötigt, so kann auf Venetzungsmittel verzichtet werden.

Die bevorzugte Acrylat-Beschichtung kann ein- oder beidseitig auf die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z.B. Antistatika, Netzmittel, Tenside, pH-Regulatoren, Antioxidantien, Farbstoffe, Pigmente, Anti-Blockmittel wie z.B. kolloidales $SiO_2$ usw. Normalerweise ist es angebracht, ein Tensid einzuarbeiten, um die Fähigkeit der wässrigen Beschichtung zur Benetzung der Trägerfolie aus Polyester zu erhöhen.

In einer weiteren bevorzugten Ausführungsform der Erfindung wird eine wasserlösliche oder hydrophile Beschichtung zur Erzielung einer besseren Haftung mit hydrophilen Schichten oder Druckfarben verwendet. Die bevorzugte hydrophile Beschichtung kann auf drei Weisen erzielt werden, und zwar mit

1. einer Mischung aus einem aromatischen Copolyester (I-1) mit einer in Wasser dispergierbaren funktionellen Gruppe und einem Polyvinylalkohol (II-1);
2. einer Mischung aus einem aromatischen Copolyester (I-2) mit einer in Wasser dispergierbaren funktionellen Gruppe und einem Polyglycerolpolyglycidylether (II-2) oder
3. einer Mischung aus einem wässrigen Polyurethan (I-3) und einem Polyvinylalkohol (II-3).

Die aromatischen Copolyester (I-1 und I-2) werden aus aromatischen Dicarbonsäuren, wie Terephthalsäure, 2,6-Naphthalindicarbonsäure oder Isophthalsäure, gegebenenfalls verzweigten oder kondensierten aliphatischen Diolen wie Ethylenglykol, Diethylenglykol, 2-Methylpropanol oder 2,2-Dimethylpropanol sowie eine esterbildende Verbindung, die eine in Wasser dispergierbare funktionelle Gruppe trägt. Beispiele für die funktionellen Gruppen sind: Hydroxyl-, Carboxyl-, Sulfonsäure- oder Phosphorsäure-Gruppen bzw. deren Salze. Bevorzugt sind Sulfonsäure- und Carbonsäure-Salze. Als Polyvinylalkohol-Komponente (II-1 und II-3) kann jeder Polyvinylalkohol verwendet werden, der wasserlöslich und mit normalen Polymerisationstechniken herstellbar ist. Generell werden solche Polyvinylalkohole durch die Verseifung von Polyvinylacetaten hergestellt. Der Verseifungsgrad sollte bevorzugt mindestens 70%, besser jedoch 80-99,9% betragen. Als Polyglycerolpolyglycidylether (II-2) werden Reaktionsprodukte von Glycerin und Epichlorhydrin mit Molekulargewichten zwischen ca. 250 und 1200 verwendet. Das wässrige Polyurethan (I-3) wird aus einem Polyol, wie Polyester mit Glykol-Endgruppen, Polyoxyethelyenglykol, Polyoxypropylenglykol, Polyoxytetramethylenglykol oder acrylische Polylole, und einem Diisocyanat, wie Xyloldiisocyanat, Hexamethylendiisocyanat,4,4'-Dicycloheylmethandiisocyanat,Toluidindiisocyanat, Phenylendiisocyanat, 4,4'-Diphenylmethandiisocyanat und 1,5-Naphthalindiisocyanat.

Die bevorzugten Copolyester-, Acrylat- und hydrophile Beschichtungen können weiterhin andere bekannte Zusätze enthalten, z.B. Antistatika, Netzmittel, Tenside, pH-Regulatoren, Antioxidantien, Farbstoffe, Pigmente, Anti-Blockmittel, z.B. kolloidales $SiO_2$, usw.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 400 µm, wobei 8 bis 300 µm, insbesondere 10 bis 300 µm, besonders bevorzugt sind. Die Dicke der gegebenenfalls

vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der Deckschicht/en wird unabhängig von den anderen Schichten gewählt und liegt bevorzugt im Bereich von 0,1 bis 10 µm, insbesondere 0,2 bis 5 µm, vorzugsweise 0,3 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die Erfindung betrifft weiterhin ein Verfahren zur Herstellung der erfindungsgemäßen Polyesterfolie nach dem an sich bekannten Extrusions- oder Koextrusionsverfahren.

Im Rahmen dieses Verfahrens wird so vorgegangen, dass die der einschichtigen Folie/die den einzelnen Schichten der Folie entsprechende/n Schmelze/n durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert, gegebenenfalls im Verlaufe des Herstellungsverfahrens an der zur Behandlung vorgesehenen Oberflächenschicht corona- oder flammbehandelt und ggf. im Verlauf des Verfahrens oder anschließend Off-line funktional beschichtet wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell laufenden Walzen. Zum Querverstrecken benutzt man allgemein einen entsprechenden Kluppenrahmen.

Eine simultane, d.h. gleichzeitige Verstreckung der erfindungsgemäßen Folie in beiden Richtungen (MD-Richtung und TD-Richtung) mit Hilfe eines dafür geeigneten Kluppenrahmens hat sich als nicht zweckmäßig erwiesen. D. h., diese Streckung führt zu einer Folie, die einen zu geringen Weißgrad und eine zu geringe Opazität aufweist.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0: 1, bevorzugt von 3,5:1 bis 4,5:1.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Die ggf. vorhandenen erfindungsgemäßen Beschichtungen können nach den auf dem Gebiet der Folienherstellung verwendeten bekannten Beschichtungsverfahren auf die orientierte opake Polyester-Folie aufgebracht werden. Das Beschichten kann z.B. durch Walzenbeschichtung, Sprühbeschichtung, Schlitzgießerantrag oder Tauchbeschichtung erfolgen. Bevorzugt wird die opake Polyester-Folie mit Gravurwalzen im sogenannten "reverse-gravure"-Verfahren beschichtet. Vor dem Beschichten wird die Folienoberfläche vorzugsweise einer Coronabehandlung in einer Coronaentladevorrichtung unterzogen, wie in den US-A 3 520 959, 3 820 939 und 4 028 032 beschrieben. Die Coronabehandlung verringert die Hydrophobie der thermoplastischen Folienoberfläche, wodurch die wässrige Beschichtung die Oberfläche besser benetzen kann. Dadurch wird die Haftung der Beschichtung an der Folienoberfläche verbessert.

Die Beschichtung kann in jedem Stadium der Folienherstellung In-line auf die thermoplastische Folie aufgebracht werden, und zwar im Stadium vor dem Strecken zum Zeitpunkt zwischen dem Vergießen der amorphen Folie und dem ersten Strecken, wie es z.B. in GB-B 1 411 564 beschrieben ist, oder im Stadium zwischen den Streckvorgängen, d.h. nach dem uniaxialen Strecken, jedoch vor dem biaxialen Strecken, wie es z.B. in US-A 4 214 035 beschrieben ist. Die der Folie während des Streckens oder der abschließenden Konditionierstufen zugeführte Wärme reicht normalerweise aus, um das Wasser und/oder andere flüchtige Bestandteile aus der Beschichtung zu vertreiben und diese zu trocknen. Die Beschichtung kann auch nach den Streckvorgängen (off-line) auf die fertige biaxial orientierte Folie aufgebracht werden. Bei einem solchen Auftragsverfahren ist in den meisten Fällen ein gesonderter Trocknungsschritt erforderlich.

Der besondere Vorteil der erfindungsgemäße Folie drückt sich durch eine gute Haftung zu anderen Materialen und durch eine hohe Opazität aus. Überraschender Weise war der Glanz der Folie ebenfalls sehr hoch. Die Opazität der erfindungsgemäßen Folie beträgt mehr als 55 %, bevorzugt mehr als 60 % und besonders bevorzugt mehr als 65 %. Der Glanz der erfindungsgemäßen Folie beträgt mehr als 50, bevorzugt mehr als 70 und besonders bevorzugt mehr als 90.

Ein weiterer Vorteil der Erfindung liegt darin, dass das bei der Herstellung der Folie immanent anfallende Regenerat in einer Konzentration von 10 bis 70 Gew.-%, bezogen auf das Gesamtgewicht der Folie, wieder verwendet werden kann, ohne dass dabei die physikalischen Eigenschaften der Folie nennenswert negativ beeinflusst werden. Insbesondere wird durch das Regenerat (im Wesentlichen aus Polyesterrohstoff und Cycloolefincopolymeren (COC)

bestehend) die Folie nicht undefiniert in der Farbe verändert, was bei den Folien nach dem Stand der Technik der Fall ist.

Darüber hinaus besteht ein weiterer Vorteil der Erfindung darin, dass die Herstellungskosten der erfindungsgemäßen Folie vergleichbar sind mit herkömmlichen transparenten Folien nach dem Stand der Technik. Die sonstigen verarbeitungs- und gebrauchsrelevanten Eigenschaften der erfindungsgemäßen Folie bleiben im wesentlichen unverändert oder sind sogar verbessert.

Die Folie eignet sich sehr gut für Innenraumverkleidungen, für Messebau und Messeartikel, für Schutzverkleidungen von Maschinen und Fahrzeugen und andere Formkörper sowie zur Verpackung von licht- und/oder luftempfindlichen Nahrungs- und Genussmitteln. Daneben ist sie auch hervorragend für den Einsatz im industriellen Bereich, z.B. bei der Herstellung von Prägefolien oder als Etikettenfolie, geeignet. Daneben ist die Folie natürlich besonders geeignet für Bildaufzeichnungspapiere, Druckbögen, magnetische Aufzeichnungskarten, um nur einige mögliche Anwendungen zu nennen. In diesen Anwendungen ist die gute Haftung zu Druckfarben, Metallschichten und anderen Beschichtungen vorteilhaft.

Das Verarbeitungs- und das Wickelverhalten der Folie, insbesondere auf schnelllaufenden Maschinen (Wickler, Metallisierer, Druck- und Kaschiermaschinen) ist ausgesprochen gut. Ein Maß für das Verarbeitungsverhalten ist der Reibungskoeffizient der Folie, der kleiner als 0,6 ist. Das Wickelverhalten wird neben einem guten Dickenprofil, einer hervorragender Planlage und niedrigem Reibungskoeffizienten entscheidend durch die Rauigkeit der Folie beeinflusst. Es hat sich herausgestellt, dass die Wickelung der erfindungsgemäßen Folie insbesondere dann gut ist, wenn unter Einbehalt der anderen Eigenschaften die mittlere Rauigkeit in einem Bereich von 50 bis 250 nm liegt. Die Rauigkeit lässt sich u.a. durch Variation der COC-Konzentration und den Verfahrensparametern beim Herstellungsprozess im angegebenen Bereich variieren.

Die nachstehende Tabelle (Tabelle 1) fasst die wichtigsten erfindungsgemäßen Folieneigenschaften noch einmal zusammen.

**Tabelle 1**

| | Erfindungsgemäßer Bereich | bevorzugt | besonders bevorzugt | Einheit | Messmethode |
|---|---|---|---|---|---|
| Formulierung | | | | | |
| Konzentration des Cycloolefincopolymeren (COC) in der Basisschicht | 2-60 | 4-50 | 6-40 | Gew.-% bezogen auf Basisschicht | |
| Glasübergangstemperaturen des Cycloolefincopolymeren (COC) | 70-270 | 90-250 | 110-220 | °C | DIN 73 765 |
| Folieneigenschaften | | | | | |
| Kontaktwinkel Wasser | ≤ 64 | ≤ 62 | ≤ 60 | ° | s. Beschreibung |
| Opazität | > 55 | > 60 | > 65 | % | DIN 53 146 |
| Glanz | >50 | >70 | >90 | | DIN 67 530 |
| COF | < 0,6 | < 0,55 | < 0,5 | | DIN 53 375 |
| Mittlere Rauigkeit $R_a$ | 50-300 | 60-250 | 70-200 | nm | DIN 4768, Cut-off von 0,25 mm |

Zur Charakterisierung der Rohstoffe und der Folien wurden die folgenden Messwerte benutzt:

**SV-Wert (standard viscosity)**

Die Standardviskosität SV (DCE) wird, angelehnt an DIN 53726, als 1%ige Lösung in Dichloressigsäure bei 25 °C gemessen. SV (DCE) = ($\eta_{rel}$-1) x 1000.

Die intrinsische Viskosität (IV) in dl/g berechnet sich wie folgt aus der Standardviskosität

$$IV\ (DCE) = 6{,}67 \cdot 10^{-4}\ SV\ (DCE) + 0{,}118$$

### Reibung

Die Reibung wurde nach DIN 53 375 bestimmt. Die Gleitreibungszahl wurde 14 Tage nach der Produktion gemessen.

### Black Marker Test

Dieser Test dient der Überprüfung der Beschichtungsqualität von mit Acrylat beschichteten Folien. Mit dem Folienschreiber (Marke: Black Ink Marker - Sanford EXPO Dry Erase Marker) wird auf die beschichtete Folienseite ein Farbstrich über die gesamte Probenbreite aufgetragen. Dieser Farbstrich muss 2 Minuten trocknen, anschließend wird mit Kosmetiktüchern dieser wieder von der beschichteten Folienseite abgerieben. Nach dem Abreiben des Farbstrichs muss noch ein leichter Farbrückstand sichtbar sein. Der Farbstrich darf sich nicht vollständig abreiben lassen. Verbleibt ein solcher Farbrückstand, so ist die Beurteilung gut, ansonsten ist die Beurteilung schlecht.

### Rauigkeit

Die Rauigkeit $R_a$ der Folie wurde nach DIN 4768 bei einem Cut-off von 0,25 mm bestimmt.

### Weißgrad und Opazität

Die Bestimmung des Weißgrades und der Opazität erfolgt mit Hilfe des elektrischen Remissionsphotometers "®ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert. WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

### Lichtdurchlässigkeit

Die Lichtdurchlässigkeit wurde in Anlehnung an ASTM-D 1033-77 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

### Glasübergangstemperatur

Die Glasübergangstemperatur Tg der COCs wurde anhand von Folienproben mit Hilfe der DSC (Differential Scanning Calorimetry) bestimmt (DIN 73 765). Verwendet wurde das Gerät DSC "Pyris" der Fa. Perkin-Elmer. Die Aufheizgeschwindigkeit betrug 20 K/min und die Einwaage ca. 12 mg. Im ersten Aufheizvorgang wurde der Glasübergang Tg ermittelt. Die Proben zeigten vielfach eine Enthalpierelaxation (ein Peak) zu Beginn des stufenförmigen Glasübergangs. Als Tg wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

### Kontaktwinkel mit Wasser

Die Polarität der Oberfläche wurde durch eine Randwinkelmessung von destillierten Wasser bestimmt. Die

Messung fand bei 23° C und 50% r.F. statt. Mittels einer Dosierspritze wird ein 1- 2 mm breiter Tropfen destilliertes Wasser auf die Folienoberfläche aufgebracht. Da die Messung bedingt durch Wärmezufuhr der Beleuchtung (Verdunstung), Aufladung oder Spreizverhalten zeitabhängig ist, verbleibt die Nadel in dem Tropfen, sodass der Tropfen während der Messung vorsichtig vergrößert und dann sofort mittels eines Goniometerokulars der Kontaktwinkel abgelesen wird. (Messung des Fortschreitwinkels). Aus 5 Messungen wird der Mittelwert gebildet.

Die nachfolgenden Beispiele dienen zur näheren Erläuterung der Erfindung

**Beispiel 1**

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Daneben wurden Chips aus Cycloolefincopolymeren (COC) der Fa. Ticona: ®Topas 6015 (COC bestehend aus 2-Norbornen und Ethylen, siehe auch W. Hatke: Folien aus COC, Kunststoffe 87 (1997) 1, S. 58-62) mit einer Glasübergangstemperatur Tg von ca. 160 °C ebenfalls dem Extruder für die Basisschicht B zugeführt. Der Anteil des Cycloolefincopolymeren (COC) an der Basisschicht betrug 10 Gew.-%.

Es wurde durch Extrusion, stufenweise Orientierung in Längs- und Querrichtung, Fixierung und anschließender Coronabehandlung (2 kW/m) eine weiße, opake einschichtige Folie einer Gesamtdicke von 23 µm hergestellt.

Basisschicht B, Mischung aus:

| | |
|---|---|
| 90,0 Gew.-% | Polyethylenterephthalat-Homopolymer mit einem SV-Wert von 800 |
| 10,0 Gew.-% | Cycloolefincopolymeren (COC) der Fa. Ticona, Topas 6015 |

Die Herstellungsbedingungen in den einzelnen Verfahrensschritten waren:

| | | |
|---|---|---|
| Extrusion | Temperaturen Basis-Schicht | 280 °C |
| | Temperatur der Abzugswalze | 30 °C |
| Längsstreckung | Temperatur | 80 - 125 °C |
| | Längsstreckverhältnis | 4,2 |
| Querstreckung | Temperatur | 80 - 135 °C |
| | Querstreckverhältnis | 4,0 |
| Fixierung | Temperatur | 230 °C |
| Dauer | | 3 s |

Die Folie hatte die geforderten guten Eigenschaften und zeigt das gewünschte Handling und das gewünschte Verarbeitungsverhalten. Die erzielten Eigenschaften derart hergestellter Folien sind in der Tabelle 2 zusammengefaßt.

**Beispiel 2**

Die Folie wurde wie in Beispiel 1 hergestellt, jedoch ohne Coronabehandlung nach dem biaxialen Strecken. Ein Latex mit 4,5 Gew.-% Feststoffgehalt, bestehend aus einem Copolymeren aus 60 Gew.-% Methylmethacrylat, 35 Gew.-% Ethylacrylat und 5 Gew.-% N-Methylolacrylamid und einem Tensid wurde nach dem folgenden Verfahren als Haftvermittlerbeschichtung auf Polyesterfolie aufgebracht:

Die längsgestreckte Folie wurde coronabehandelt (8 kW/m) und danach durch Reversgravurbeschichtung mit dem oben beschriebenen Latex beschichtet.

Die biaxial gestreckte Folie wurde bei 230 °C thermofixiert. Das Trockengewicht der Beschichtung betrug ca. 0,035 g/m$^2$.

Die Folie wurde auf ihre reprografische Haftung geprüft und ergab eine gute Haftung.

**Beispiel 3**

Die Folie wurde wie in Beispiel 2 hergestellt. Eine wässrige Dispersion mit 6 Gew.-% Copolyester, bestehend aus 95 mol-% Isophthalat, 5 mol-% Na-5-Sulfoisophthalat und 100 mol-% Ethylenglykol, und 0,56 Gew.-% kolloidalem $SiO_2$ wurde nach dem folgenden Verfahren als Beschichtung auf eine Polyesterfolie aufgebracht:

Die längsgestreckte Folie wurde durch Reverse-gravure-Beschichtung mit der oben beschriebenen Copolyesterdispersion beschichtet.

Die biaxial gestreckte Folie wurde bei 230 °C thermofixiert. Das Trockengewicht der Beschichtung betrug ca. 0,030 $g/m^2$.

Zwei Proben der so hergestellten einseitig beschichteten Folie wurden in einen Vakuumlaborbeschichter eingebracht, und zwar so, dass bei der einen Probe die beschichtete und bei der anderen die unbeschichtete Seite metallisiert wurde. Die Vakuumkammer wurde bis auf unter $10^{-4}$ Torr evakuiert, und von einem Wolframfaden wurden etwa 500 Å Aluminium sowohl auf die unbeschichtete Seite als auch auf die beschichtete Probe aufgedampft.

Innerhalb von 30 sec nach Entnahme aus der Vakuumkammer wurde jede Probe auf "Metallabrieb" geprüft. Zu diesem Zweck wurde an jeder untersuchten Probe mit einem Baumwollvlies mit der gleichen Anzahl von Strichen und in etwa dem gleichen Druck leicht über die Metalloberfläche gerieben. Das "Abriebverhalten" der beschichteten Seite der Folie wurde als gut bewertet.

### Beispiel 4

Die Folie wurde wie in Beispiel 1 hergestellt, jedoch ohne Coronabehandlung nach dem biaxialen Strecken. Eine wässrige Dispersion mit 7 Gew.-% Feststoffgehalt, bestehend aus 50 Gew.-% des aromatischen Copolyesters A1 (Copolyester enthaltend 90 mol-% Terephthalat, 10 mol-% 5-Natriumsulfoisophthalat, 80 mol-% Ethylenglykol und 20 mol-% Diethylenglykol), 45 Gew.-% des wasserdispergierbaren Polymers B2 (Polyvinylalkohol mit einem Verseifungsgrad von 88 mol-% und einem Polymerisationsgrad von 1.700) und 5 Gew.-% an inerten Partikeln D1 (kolloidales $SiO_2$ mit einem Partikeldurchmesser von 0,05 µm) wurde nach dem folgenden Verfahren als Beschichtung auf eine Polyesterfolie aufgebracht:

Die längsgestreckte Folie wurde durch Revers-gravur-Beschichtung mit der oben beschriebenen Copolyesterdispersion beschichtet. Das Trockengewicht der Beschichtung betrug ca. 0,040 $g/m^2$ bei einer Beschichtungsdicke von etwa 0,05 µm.

Zur Beurteilung der Haftvermittlerwirkung der Beschichtung wurde eine wässrige Polyvinylacetal-Lösung (S-Lec KX-1, hergestellt von Sekisui Chemical Co., Ltd.; im folgenden als KX-1 bezeichnet) wurde auf die beschichtete Folie aufgebracht und getrocknet. Die Beschichtungslösung hatte eine Konzentration von 8 Gew.-% und wurde mit einem Applikator vom Baker-Typ mit einer Schichtdicke von 127 µm aufgebracht. Die beschichtete Folie wurde unverzüglich zum Trocknen bei 100 °C für 4 Minuten in einen Ofen gestellt. Ein schwarzes Quadrat (Fläche: 12 x 12 cm) wurde mit einem Ink-jet-Drucker (BJC-600J, Canon Inc.) auf die Oberfläche der getrockneten KX-1 Beschichtung gedruckt und für 12 Stunden bei 23 °C und 50 % relativer Luftfeuchtigkeit unter Luft getrocknet. Ein Klebeband (Cellotape, Nichiban Inc. Breite: 18 mm) wurde auf die bedruckte Fläche geklebt und schnell abgezogen.

Der Grad der mit dem Klebeband abgetrennten bedruckten Oberfläche wurde visuell bestimmt. Die beschichtete Folie zeigte gute Hafteigenschaften.

### Vergleichsbeispiel 1

Eine Folie wie aus Beispiel 1 wurde hergestellt, jedoch ohne Coronabehandlung. Der Kontaktwinkel zu Wasser betrug 65,5° und die Haftung zu Metall war schlecht.

**Tabelle 2**

| Beispiel | Dicke der Folie | Schichtaufbau | Additiv zum Polyesterrohstoff | Konzentration d. Additivs in Basisschicht | Glasübergangstemperatur des Additivs | Weißgrad | Opazität | Kontaktwinkel zu Wasser | Glanz | Reibung COF | Mittlere Rauigkeit Ra | |
|---|---|---|---|---|---|---|---|---|---|---|---|---|
| | | | | | | | | | | A-Seite gegen C-Seite | A-Seite | C-Seite |
| | µm | | | Gew.-% | °C | % | % | | | | nm | nm |
| B1 | 30 | B | COC | 10 | 170 | 75 | 75 | 63,7° | 115 | 0,52 | 120 | 120 |
| B2 | 30 | B | COC | 10 | 170 | 75 | 75 | 63,8° | 120 | 0,50 | 110 | 110 |
| B3 | 30 | B | COC | 10 | 170 | 75 | 75 | 57,0° | 125 | 0,42 | 100 | 100 |
| B4 | 30 | B | COC | 10 | 170 | 75 | 75 | <50° | 130 | 0,35 | 98 | 98 |
| VB1 | 23 | B | COC | 10 | 170 | 75 | 75 | 65,5° | 115 | 0,52 | 120 | 120 |

## Patentansprüche

1. Opake, biaxial orientierte Polyesterfolie umfassend mindestens eine Schicht, **dadurch gekennzeichnet, dass** zumindest diese Schicht ein Cycloolefincopolymeres (COC) in einer Konzentration von 2 bis 60 Gew.-%, bezogen auf diese Schicht, enthält, wobei die Glasübergangstemperatur des Cycloolefincopolymeren (COC) im Bereich von 70 bis 270 °C liegt, und dass mindestens eine Oberfläche der Folie durch Corona- oder Flammbehandlung und/oder eine aufgebrachte Haftvermittlerschicht haftvermittelt ist, wobei die Haftvermittlerschicht eine oder mehrere Substanzen, ausgewählt aus der Gruppe Acrylate, Ethylenvinylalkohole, PVDC, Wasserglas, hydrophile Polyester, Polyvinylacetate, Polyurethane, Alkali- oder Erdalkalisalze von $C_{10}$-$C_{18}$-Fettsäuren und Butadiencopolymere mit Acrylnitril oder Methylmethacrylat, Methacrylsäure, Acrylsäure oder deren Ester, enthält.

2. Polyesterfolie nach Anspruch 1, **dadurch gekennzeichnet, dass** das Cycloolefincopolymer (COC) Polynorbornen, Polydimethyloctahydronaphthalin, Polycyclopenten oder Poly(5-methyl)norbornen enthält.

3. Polyesterfolie nach Anspruch 1 oder 2, **dadurch gekennzeichnet, dass** das Cycloolefincopolymere (COC) eine Glasübergangstemperatur im Bereich von 90 bis 250 °C aufweist.

4. Polyesterfolie nach einem der Ansprüche 1 oder 2, **dadurch gekennzeichnet, dass** das Cycloolefincopolymere (COC) eine Glasübergangstemperatur im Bereich von 110 bis 220 °C aufweist.

5. Polyesterfolie nach einem oder mehreren der Ansprüche 1 bis 4, **dadurch gekennzeichnet, dass** die Folie Opazität von mehr als 55% aufweist.

6. Polyesterfolie nach einem oder mehreren der Ansprüche 1 bis 5, **dadurch gekennzeichnet, dass** die Folie einen Weißgrad von mehr als 70 % aufweist.

7. Polyesterfolie nach einem oder mehreren der Ansprüche 1 bis 6, **dadurch gekennzeichnet, dass** die Folie einen Glanz von mehr als 5 aufweist.

8. Polyesterfolie nach einem oder mehreren der Ansprüche 1 bis 7, **dadurch gekennzeichnet, dass** die Schicht 0,5 bis 25 Gew.-% weiterer vakuoleniniziierender und/oder weißer Füllstoffe und/oder Pigment enthält, jeweils bezogen auf das Gewicht der Schicht.

9. Polyesterfolie nach einem oder mehreren der Ansprüche 1 bis 8, **dadurch gekennzeichnet, dass** auf der COC-haltigen Schicht eine Deckschicht angeordnet ist.

10. Polyesterfolie nach Anspruch 9, **dadurch gekennzeichnet, dass** zwischen der COC-haltigen Schicht und der Deckschicht eine Zwischenschicht angeordnet ist.

11. Polyesterfolie nach einem oder mehreren der Ansprüche 1 bis 10, **dadurch gekennzeichnet, dass** die haftvermittelte Oberfläche der Folie mit Corona behandelt wurde.

12. Polyesterfolie nach einem oder mehreren der Ansprüche 1 bis 11, **dadurch gekennzeichnet, dass** mindestens eine Oberfläche der Folie eine Haftvermittlerschicht trägt.

13. Polyesterfolie nach Anspruch 12, **dadurch gekennzeichnet, dass** die Haftvermittlerschicht einen Copolyester enthält.

14. Polyesterfolie nach Anspruch 12, **dadurch gekennzeichnet, dass** die Haftvermittlerschicht eine Acrylat-Beschichtung ist.

15. Polyesterfolie nach Anspruch 12, **dadurch gekennzeichnet, dass** die Haftvermittlerschicht eine hydrophile Beschichtung ist.

16. Polyesterfolie nach einem oder mehreren der Ansprüchen 11 bis 15, **dadurch gekennzeichnet, dass** die haftvermittelte Seite einen Kontaktwinkel zu Wasser von ≤ 64° hat.

17. Polyesterfolie nach Anspruch 1, **dadurch gekennzeichnet, dass** die Folie eine Opazität von mehr als 60 % aufweist, und dass mindestens eine Oberfläche der Folie einen Kontaktwinkel zu Wasser von ≤ 64° hat.

**18.** Polyesterfolie nach Anspruch 1, **dadurch gekennzeichnet, dass** die Folie einen Weißgrad von mehr als 70 % aufweist und mindestens eine Oberfläche der Folie einen Kontaktwinkel zu Wasser von ≤ 64° hat.

**19.** Polyesterfolie nach Anspruch 1, **dadurch gekennzeichnet, dass** die Folie einen Glanz von mehr als 50 aufweist, und mindestens eine Oberfläche der Folie einen Kontaktwinkel zu Wasser von ≤ 64° hat.

**20.** Verfahren zur Herstellung einer Folie nach Anspruch 1, **dadurch gekennzeichnet, dass** die der einschichtigen Folie/die den einzelnen Schichten der Folie entsprechende Schmelze/entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls zwischen Extrusion und Thermofixierung beschichtet und/oder nach der Thermofixierung an der zur Behandlung vorgesehenen Oberflächenschicht corona- oder flammbehandelt wird.

**21.** Verwendung einer Folie gemäß Anspruch 1 als Innenraumverkleidung, Schutzverkleidung, Verpackungsfolie, Prägefolie und Etikettenfolie.

**22.** Verwendung einer Folie gemäß Anspruch 1 in Laminaten, Bildaufzeichnungspapieren, Druckbögen und magnetische Aufzeichnungskarten.

## Claims

**1.** An opaque, biaxially oriented polyester film encompassing at least of one layer, wherein at least this layer comprises a concentration of from 2 to 60 % by weight, based on this layer, of a cycloolefin copolymer (COC), where the glass transition temperature of the cycloolefin copolymer (COC) is in the range from 70 to 270 °C, and wherein at least one surface of the film has been adhesion-promoted via corona- or flame-treatment and/or an applied adhesion-promoter layer, the adhesion-promoter layer comprising one or more substances selected from the group consisting of acrylates, ethylene vinyl alcohols, PVDC, waterglass, hydrophilic polyester, polyvinyl acetates, polyurethanes, alkali metal or alkaline earth metal salts of $C_{10}$-$C_{18}$ fatty acids and butadiene copolymers with acrylonitrile or methyl methacrylate, methacrylic acid, acrylic acid, or esters of these.

**2.** The polyester film as claimed in claim 1, wherein the cycloolefin copolymer (COC) comprises polynorbornene, polydimethyloctahydronaphthalene, polycyclopentene, or poly(5-methyl)norbornene.

**3.** The polyester film as claimed in claim 1 or 2, wherein the cycloolefin copolymer (COC) has a glass transition temperature in the range from 90 to 250 °C.

**4.** The polyester film as claimed in claim 1 or 2, wherein the cycloolefin copolymer (COC) has a glass transition temperature in the range from 110 to 220 °C.

**5.** The polyester film as claimed in one or more of claims 1 to 4, which has opacity of more than 55 %.

**6.** The polyester film as claimed in one or more of claims 1 to 5, which has whiteness of more than 70 %.

**7.** The polyester film as claimed in one or more of claims 1 to 6, which has gloss of more than 5.

**8.** The polyester film as claimed in one or more of claims 1 to 7, wherein the layer comprises from 0.5 to 25 % by weight of other vacuole-initiating and/or white fillers and/or pigment, based in each case on the weight of the layer.

**9.** The polyester film as claimed in one or more of claims 1 to 8, wherein an outer layer has been arranged on the COC-containing layer.

**10.** The polyester film as claimed in claim 9, wherein an intermediate layer has been arranged between the COC-containing layer and the outer layer.

**11.** The polyester film as claimed in one or more of claims 1 to 10, wherein that surface of the film which has adhesion

promoter has been corona-treated.

**12.** The polyester film as claimed in one or more of claims 1 to 11, wherein at least one surface of the film bears an adhesion-promoter layer.

**13.** The polyester film as claimed in claim 12, wherein the adhesion-promoter layer comprises a copolyester.

**14.** The polyester film as claimed in claim 12, wherein the adhesion-promoter layer is an acrylate coating.

**15.** The polyester film as claimed in claim 12, wherein the adhesion-promoter layer is a hydrophilic coating.

**16.** The polyester film as claimed in one or more of claims 11 to 15, wherein the side which has adhesion promoter has a contact angle of ≤ 64 ° with respect to water.

**17.** The polyester film as claimed in claim 1, which has opacity of more than 60 %, wherein at least one surface of the film has a contact angle of ≤ 64 ° with respect to water.

**18.** The polyester film as claimed in claim 1, which has whiteness of more than 70 %, wherein at least one surface of the film has a contact angle of ≤ 64 ° with respect to water.

**19.** The polyester film as claimed in claim 1, which has gloss of more than 50, wherein at least one surface of the film has a contact angle of ≤ 64 ° with respect to water.

**20.** A process for producing a film as claimed in claim 1, which comprises extruding/coextruding through a flat-film die the melt(s) corresponding to the individual layers of the film, drawing off the resultant film on one or more rolls for solidification, then biaxially stretching (orienting) the film, heat-setting the biaxially stretched film, and, where appropriate, coating the film between extrusion and heat-setting, and/or corona- or flame-treating the film after heat-setting, on the surface intended for treatment.

**21.** The use of the film as claimed in claim 1 as interior surfacing, protective surfacing, packaging film, hot-stamping foil, or label foil.

**22.** The use of the film as claimed in claim 1 in laminates or in image-recording papers, print feedstock, or magnetic recording cards.

## Revendications

**1.** Film polyester opaque orienté biaxialement, comprenant au moins une couche, **caractérisé en ce qu'**au moins cette couche comprend un copolymère de cyclooléfine (COC) en une concentration de 2 à 60 % en poids par rapport à cette couche, la température de transition vitreuse du copolymère de cyclooléfine (COC) se situant dans l'intervalle de 70 à 270°C, et **en ce qu'**au moins une surface du film a subi un traitement de primaire grâce à un traitement corona ou traitement à la flamme et/ou une couche de primaire déposée, la couche de primaire comprenant une ou plusieurs substances choisies dans le groupe des acrylates, alcools d'éthylène vinyle, PVDC, verre soluble, polyesters hydrophiles, acétates de polyvinyle, polyuréthanes, sels alcalins ou alcalino-terreux d'acides gras en $C_{10}$ à $C_{18}$ et copolymères de butadiène avec de l'acrylonitrile ou du méthacrylate de méthyle, acide méthacrylique, acide acrylique ou leurs esters.

**2.** Film polyester selon la revendication 1, **caractérisé en ce que** le copolymère de cyclooléfine (COC) comprend du polynorbornène, du polydiméthyloctahydronaphtalène, du polycyclopentène ou du poly(5-méthyl)norbornène.

**3.** Film polyester selon la revendication 1 ou 2, **caractérisé en ce que** le copolymère de cyclooléfine (COC) présente une température de transition vitreuse dans l'intervalle de 90 à 250°C.

**4.** Film polyester selon la revendication 1 ou 2, **caractérisé en ce que** le copolymère de cyclooléfine (COC) présente une température de transition vitreuse dans l'intervalle de 110 à 220°C.

**5.** Film polyester selon l'une ou plusieurs des revendications 1 à 4, **caractérisé en ce que** le film présente une opacité

de plus de 55 %.

6. Film polyester selon l'une ou plusieurs des revendications 1 à 5, **caractérisé en ce que** le film présente un degré de blancheur de plus de 70 %.

7. Film polyester selon l'une ou plusieurs des revendications 1 à 6, **caractérisé en ce que** le film présente une brillance de plus de 5.

8. Film polyester selon l'une ou plusieurs des revendications 1 à 7, **caractérisé en ce que** la couche comprend 0,5 à 25 % en poids d'autres charges induisant des vacuoles et/ou charges blanches et/ou pigments, respectivement par rapport au poids de la couche.

9. Film polyester selon l'une ou plusieurs des revendications 1 à 8, **caractérisé en ce qu'**une couche de recouvrement est disposée sur la couche contenant le COC.

10. Film polyester selon la revendication 9, **caractérisé en ce qu'**une couche intermédiaire est disposée entre la couche contenant le COC et la couche de recouvrement.

11. Film polyester selon l'une ou plusieurs des revendications 1 à 10, **caractérisé en ce que** la surface du film ayant subi un traitement de primaire a été traitée corona.

12. Film polyester selon l'une ou plusieurs des revendications 1 à 11, **caractérisé en ce qu'**au moins une surface du film porte une couche de primaire.

13. Film polyester selon la revendication 12, **caractérisé en ce que** la couche de primaire comprend un copolyester.

14. Film polyester selon la revendication 12, **caractérisé en ce que** la couche de primaire est un revêtement acrylate.

15. Film polyester selon la revendication 12, **caractérisé en ce que** la couche de primaire est un revêtement hydrophile.

16. Film polyester selon l'une ou plusieurs des revendications 11 à 15, **caractérisé en ce que** la face ayant subi un traitement primaire a un angle de contact par rapport à l'eau de $\leq 64°$.

17. Film polyester selon la revendication 1, **caractérisé en ce que** le film présente une opacité de plus de 60 % et qu'au moins une surface du film a un angle de contact par rapport à l'eau de $\leq 64°$.

18. Film polyester selon la revendication 1, **caractérisé en ce que** le film présente une opacité de plus de 70 % et qu'au moins une surface du film a un angle de contact par rapport à l'eau de $\leq 64°$.

19. Film polyester selon la revendication 1, **caractérisé en ce que** le film présente une brillance de plus de 50 et qu'au moins une surface du film a un angle de contact par rapport à l'eau de $\leq 64°$.

20. Procédé de fabrication d'un film selon la revendication 1, **caractérisé en ce que** la ou les matières fondues correspondant au film monocouche/aux différentes couches du film est extrudée/sont coextrudées à travers une filière plate, le film ainsi obtenu est embobiné pour solidification sur un ou plusieurs cylindres, le film est ensuite étiré (orienté) biaxialement, le film étiré biaxialement est thermofixé et le cas échéant enduit entre l'extrusion et le thermofixage et/ou traité corona ou traité à la flamme après le thermofixage sur la couche prévue pour le traitement.

21. Utilisation d'un film selon la revendication 1 sous forme d'habillage d'espace intérieur, de vêtements de protection, film d'emballage, film d'estampage et film pour étiquettes.

22. Utilisation d'un film selon la revendication 1 dans des stratifiés, des papiers photosensibles, des imprimés et des cartes d'enregistrements magnétiques.